# EUROPEAN PATENT APPLICATION

(11) **EP 1 229 108 A1**
(43) Date of publication of application: **07.08.2002**
(21) Application number: 02425051.6
(22) Date of filing: 04.02.2002
(51) Int. Cl.: C12G 1/032

(54) **Apparatus for fermentation of substances, particularly for vinification**

(30) Priority: 05.02.2001 IT RM010056
(71) Applicant: Petrillo, Francesco, 00048 Nettuno (RM) (IT)
(72) Inventor: Petrillo, Francesco, 00048 Nettuno (RM) (IT)
(74) Representative: Iannone, Carlo Luigi

(57) **Abstract**

The invention concerns an apparatus for fermentation of substances, particularly for vinification, comprising a container (1), within which the product is fed, substantially from the bottom, a substantially conical shaped element (3), comprised of holed sheet, provided above within said container (1), and centrally provided with a tube (4), extending downward within the container (1), said tube (4) being provided at the bottom with a holed sheet part (6), and under said holed sheet part (6), with an opening/closure valve (7) for the ascent of the product along said tube (4).

## Description

The present invention relates to an apparatus for fermentation of substances, particularly for vinification.

In the following, the invention will be particularly described with reference to the fermentation of grape, for the vinification, but it is to be understood that it cannot be in any way intended to limit the invention, the technical teachings of which can be applied to the fermentation of different substances, such as rice, etc.

As it is well known, in many industries, and particularly in the wine industry, apparatuses are employed to promote the fermentation of the product, in order to obtain the best features of the same product.

It is also known that the fermentation is a product occurring in products in presence of sugars; from the fermentation process, alcoholic products are obtained.

In order to avoid that alcohol transforms into acetic acid, fermentation usually occurs within tanks, closed by covers and vent valves for pressure due to the fermentation process.

In order to anticipate the aroma, colour, perfume extraction time, nowadays different systems are used.

Mainly, wine making device already available on the market provide a container, within which the pressed and rape-free grape is introduced; a pump, to reascend the fermenting musts, to optimally extract the colour from the same dregs of grapes.

Optimum and fast colour extraction is one of the goals to be reached when realising a wine making device.

Solutions recently adopted to realise wine making device have been studied in order to optimise the vinification, and provide an upper cone, centrally provided with a short tube for the passage of the product, the cone having the function of maintaining dregs of grapes immersed, said dregs of grapes being accumulated in the part under the same cone, a pump for the ascent of the fermenting must, thus helping the exploitation of the dregs of grapes, but in any case a passage of the must through the dregs of grapes does not occur, thus prolonging the colour extraction time.

A further solution that has been recently suggested, provides the upper cone on the product container, comprised of holed sheet, and always provided with a central tube, having a valve on its upper part.

The holed sheet has a lateral safety cover, through which possible overpressure should vent.

Holes of the cone allow to the fermenting product to pass through upward, but most of the same product flows over the grid, both from the pressure vent cover, and from the central descending tube, the latter being always opened from the bottom, filling in with the product during the container feeding phase, the product not being in this phase separated from the mulages by floatation, since the fermentation, and thus the natural separation process, has not started yet.

Obstruction of the grid, due to the mulages accumulated above the same, prevents the natural ascent of the product; to obtain the ascent, a pump is provided.

In view of the above, the Applicant has realised an innovative fermentation apparatus, allowing to completely extract colour, aroma and perfume of the product within a very short time.

A further object of the present invention is that of eliminating the needing of ascending the product by the use of mechanical means, breaking up the product and producing pulp. Particularly, in case of wine production, dreg is increased, breaking up grape-stones, that, once broken, release not desired acids and oils.

Still another object of the present invention is that of reducing the electric power consumption, particularly eliminating the ascent pumps.

Further object of the present invention is that of reducing the contact time with the fermentation residuals, thus qualitatively improving the final product obtained.

An object of the present invention is that of reducing the fermentative process time, thus allowing to reduce the number of fermentatori that must be used by each company, for the same production, with a remarkable saving of costs.

It is still an object of the present invention that of having the fermentation carried out with lower temperatures, naturally optimising the ascent and consequently also the temperature.

These and other results are obtained, according to the present invention, obtained high quality products.

It is therefore specific object of the present invention an apparatus for fermentation of substances, particularly for vinification, comprising a container, within which the product is fed, substantially from the bottom, a substantially conical-shaped element, comprised of holed sheet, provided above within said container, and centrally provided with a tube, extending downward within the container, said tube being provided at the bottom with a holed sheet part, and under said holed sheet part, with an opening/closure valve for the ascent of the product along said tube.

According to the invention, said central tube is laterally provided with a cooling liner.

Furthermore, according to the invention, washing of the apparatus is provided by water, fed by a tube, said tube being provided on its end with a washing rose.

Still according to the invention, said apparatus can be provided with a pressure switch, to reveal the pressure under the holed sheet conical shaped element.

Always according to the invention, lower extraction of the product from the container can be comprised of a slanted bottom, spout extractor, or of an extractor with different inclination features, on the basis of the required capacity.

Still according to the invention the apparatus can be provided with an injection/nebuiization valve, placed at the beginning of the inner tube where the natural ascent occurs in such a way to perfectly amalgamate the product during the mass passage.

Finally, according to the invention, products introduced within the container can be nebulised by the chosen gas, such as oxygen, carbon dioxide, nitrogen, etc.

The present invention will be now described, for illustrative but not limitative purposes, according to its preferred embodiments, with particular reference to the figures of the enclosed drawings, wherein:

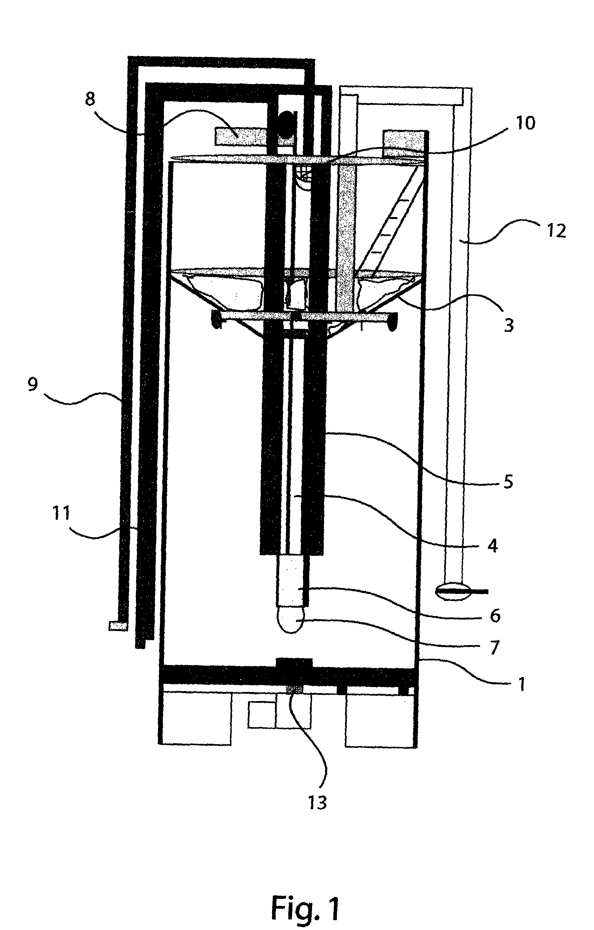

figure 1 is a schematic view of an empty apparatus according to the invention;

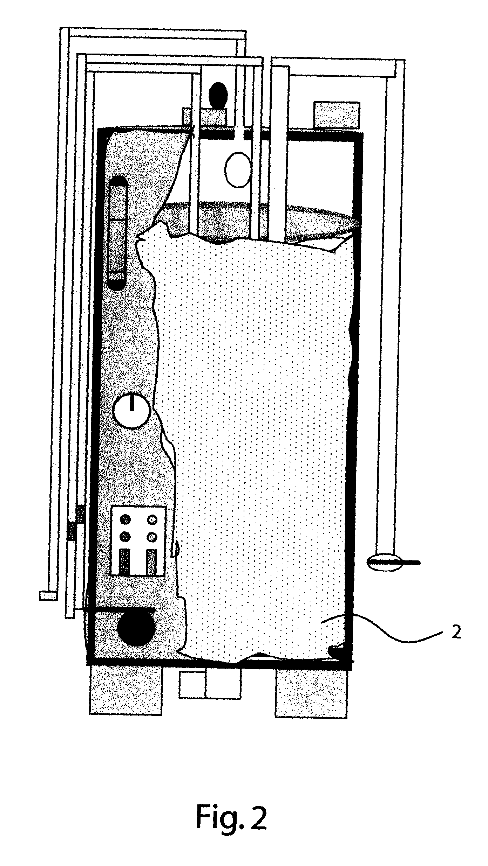

figure 2 is a schematic view of the apparatus of figure 1 during the filling phase; and

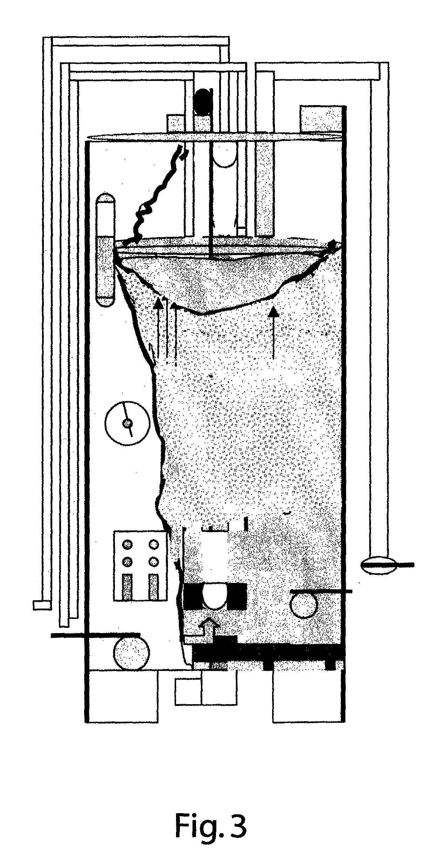

figure 3 is a schematic view of the apparatus of figure 1 during the fermentative phase.

The solution according to the invention works according to a submerged cap mode on the basis of the action of the carbonic acid produced during the fermentation.

Observing now all the figures of the enclosed drawings, the apparatus according to the invention provides a container 1, within which the product 2 is introduced from the bottom. Said apparatus provides above a holed sheet cone 3, with a tube 4 passing centrally through the same cone 3, the lateral wall of the tube 4 providing a cooling liner 5.

Said tube 4 extends downward within the container 1, ending with a holed sheet tube part 6, under which a valve 7 is provided, controlling the product ascent through the tube 4.

By the numeral reference 8 the opening/closure control of said valve 7 is indicated.

Furthermore, there are provided a tube 9 for the washing water, with a washing rose 10 provided on the end faced toward the cone 3, and a tube 11 for the cooling water within the cooling liner 5.

It must be taken into consideration that, before feeding the product to the apparatus according to the invention, it is necessary to verify that valve 7 of ascent tube 4 is closed.

During the introduction, product 2 that is introduced is rich of mulages, that must not penetrate within the ascent tube 4, since they would obstruct the holed sheet cone 3, separating the container 1 from the upper part of the apparatus.

When the fermentation is started, due to the CO₂ creation, mulages will enrich with the gas, naturally produced by the fermentative process and while becoming lighter, will compact toward the cone 3 surface, thus remaining immersed within the liquid.

The prosecution of the fermentation will increase the pressure under the cone 3, and a pressure switch will control the opening of the ascent valve 7.

After the opening of the valve 7, mulages free product 2 will ascend above the holed sheet cone 3, so that the same product will pass through the cone 3 from the bottom upward, thus making soft and porous mulages under the cone 3.

Tube 4 liner 5 also has the thermal exchange function, being it provided the inner passage of the cool water fed by the tube 11, in order to stabilise the fermentation temperature on the basis of the specific needing.

Exchange occurs on both sides, thus allowing to the product to absorb the available refrigeration unit.

Holed sheet lower part 6 of the tube 4 has the object the venting the pressure within the container 1, when the valve 7 is closed, for example if said valve should not open due to a malfunctioning.

In order to reach the maximum operative sureness with respect to the pressure that will be formed under the cone 3, a outer ascent tube 12 is provided, the end of which ending under the holed sheet cone 3, in order to guarantee the vent of possible overpressures.

In case, at the beginning or at the end of the working period, the fed product 2 should not allow to fill the apparatus according to the invention up to the holed sheet cone 3 level, the natural ascent described in the above would not occur in the apparatus according to the invention. In this case, the operation could occur as in the traditional apparatuses, and the ascent of the product would occur drafting from the partial discharge valve by a pump, employing the outer tube 12, and the relevant diffuser 13.

The lower extraction of the container 1, indicated by the numeral reference 13, can be of different kind. Theoretically, the apparatus according to the invention can be realised without the extractor, but with an inclined bottom, a spout bottom, or with other inclined bottoms on the basis of the required capacity.

In the following, the operation of the apparatus according to the invention will be described.

Basic element for the operation of the apparatus according to the invention is the valve 7 provided at the end of tube 4.

At the beginning, dregs of grapes stratifies toward the surface, remaining soft, without compacting and is crossed upward by the fermenting must, being subjected to a continuous washing, thanks to the holed sheet cone 3, maintaining the dregs of grapes submerged, letting the same being crossed by the must, without grape-stones and mulages on the surface, that otherwise would obstruct the cone 3.

During the second fermentative phase, dregs of grapes begins to compact under the holed sheet cone 3, thus creating an obstacle to the passage of the great amount of CO₂ created during the fermentative process. It should be sufficient to think that 100 I of must with 16 sugar degrees develops more than 4,50 I of carbonic acid at a temperature of 15°C, measured at the atmospheric pressure. In an apparatus containing 80,000 I, more than 3,600 litres of carbonic acid are developed during the fermentative process.

The increasing of the pressure within the container 1 determines the ascent of must through the ascent tube 4, passing through the holed sheet lower part 6.

Naturally, while the fermentation increases, mass ascending through the tube 4 increases, falling on the upper part of the cone 3 grid, without grape-stones and mulages that are stratified under the same, passes through the dregs of grapes according to a direction opposite with respect to the initial one, thus making them again soft and that can be crossed according to both the directions by the fermenting mass, with a natural forces balancing.

The use of the apparatus according to the invention allows to realise the different motion of the visible mass from the above of the container, beyond exceptional results with reference to the fast colour extraction.

Natural ascent of the product along the tube 4 increases and diminishes on the basis of the intensity of the same fermentation, conforming to the needing of the product and helping the same to lower the fermentation temperature with the increase of the ascent.

To further add other products 2, without employing pumps that would fragment the suspended parts, the apparatus according to the invention can be provided with a injection/nebuiization valve, placed at the beginning of the inner tube, where the natural ascent occurs, in such a way to perfectly amalgamate the product when the mass passes.

Further, product introduced within the container can be nebulised with the chosen gas, such as oxygen, carbon dioxide, nitrogen etc.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for fermentation of substances, particularly for vinification, **characterised in that** it comprises a container, within which the product is fed, substantially from the bottom, a substantially conical-shaped element, comprised of holed sheet, provided above within said container, and centrally provided with a tube, extending downward within the container, said tube being provided at the bottom with a holed sheet part, and under said holed sheet part, with an opening/closure valve for the ascent of the product along said tube.

2. Apparatus for fermentation of substances according to claim 1, **characterised in that** said central tube is laterally provided with a cooling liner.

3. Apparatus for fermentation of substances according to one of the preceding claims, **characterised in that** washing of the apparatus is provided by water, fed by a tube, said tube being provided on its end with a washing rose.

4. Apparatus for fermentation of substances according to one of the preceding claims, **characterised in that** said apparatus is provided with a pressure switch, to reveal the pressure under the holed sheet conical shaped element.

5. Apparatus for fermentation of substances according to one of the preceding claims, **characterised in that** lower extraction of the product from the container is comprised of a slanted bottom, spout extractor, or of an extractor with different inclination features, on the basis of the required capacity.

6. Apparatus for fermentation of substances according to one of the preceding claims, **characterised in that** it is provided with an injection/nebulization valve, placed at the beginning of the inner tube where the natural ascent occurs in such a way to perfectly amalgamate the product during the mass passage.

7. Apparatus for fermentation of substances according to one of the preceding claims, **characterised in that** products introduced within the container are nebulised by the chosen gas, such as oxygen, carbon dioxide, nitrogen, etc.

8. Apparatus for fermentation of substances according to each one of the preceding claims, substantially as illustrated and described.
